# EUROPEAN PATENT APPLICATION

(11) **EP 2 221 568 A1**
(43) Date of publication of application: **25.08.2010**
(21) Application number: 08848735.0
(22) Date of filing: 13.11.2008
(51) Int. Cl.: F28D 20/00, C09K 5/16

(54) **CHEMICAL HEAT STORAGE APPARATUS**

(30) Priority: 13.11.2007 JP 2007293925
(71) Applicant: Panasonic Corporation, Kadoma-shi Osaka 571-8501 (JP)
(72) Inventor: MOTOHIRO SUZUKI, Chuo-ku, Osaka 540-6207 (JP); ATSUSHI KAKIMOT, Chuo-ku, Osaka 540-6207 (JP); TORU SUKAWA, Chuo-ku, Osaka 540-6207 (JP); MIO FURUI, Chuo-ku, Osaka 540-6207 (JP)
(74) Representative: Eisenführ, Speiser & Partner
(86) International application number: PCT/JP2008/003312
(87) International publication number: WO 2009/063640

(57) **Abstract**

A chemical heat-storage apparatus 100 is provided with: a container 202 accommodating a heat storage material 210 that has a higher specific gravity than water and exothermically reacts with water; a heat exchanger 209 that is provided inside the container 202 and that gives heat to the heat storage material 210 in a heat storage process as well as absorbing heat from the heat storage material 210 in a heat release process; a water flow path 204 that has openings 203 opening downwardly and that is provided below the heat exchanger 209 inside the container 202 so as to supply, to the inside of the container 202, the water to react with the heat storage material 210; and a distribution plate 206 that is provided below the heat exchanger 209 inside the container 202 and above the opening 203 and that has a plurality of through holes 205 for introducing the water supplied to the inside of the container 202 from a lower part to an upper part.

## Description

### TECHNICAL FIELD

The present invention relates to a heat storage apparatus using a chemical reaction of a heat storage material.

### BACKGROUND ART

Heat storage technology for storing energy is useful as one of energy-saving technologies. In recent years, water heaters or heaters using a CO₂ heat pump or a fuel cell cogeneration system have attracted attention. High-density heat-storage technology is under development aiming to average the electricity demand throughout a day by heat storage using midnight power as well as to improve the installation convenience by downsizing these devices.

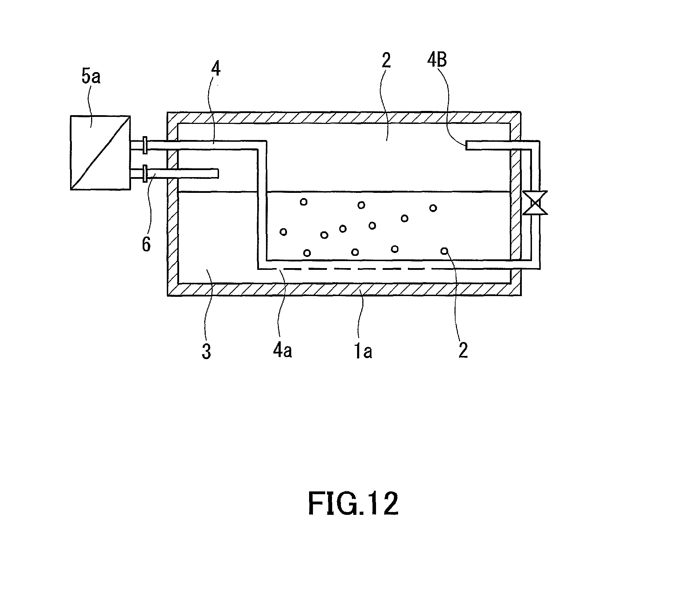

For example, JP 2005-188916 A and JP 2007-132534A each describe a latent heat storage apparatus in which heat is stored by direct heat exchange between a heat storage material (latent heat storage material) and a heat exchange medium (oil). In the latent heat storage apparatus of JP 2005-188916 A, oil 2 and a heat storage material 3 are accommodated separately in a container 1a, as indicated in Fig. 12. Two pipes 4 and 6 are connected to a heat exchanger 5a. The pipe 4 is formed with a plurality of openings 4a for discharging the oil 2. The oil 2 is introduced through the pipe 6 into the heat exchanger 5a, and the oil 2 is supplied through the pipe 4 to the heat storage material 3. The oil 2 discharged through the pipe 4 moves upward through the layers of the heat storage material 3 based on the difference in specific gravity between the oil 2 and the heat storage material 3. At this time, heat is exchanged between the oil 2 and the heat storage material 3, so that the heat is stored.

The heat storage material 3 such as sodium acetate is in a solid state at the time of the start of the heat storage process. Therefore, there is a possibility that the openings 4a of the pipe 4 are closed by the heat storage material 3. For such a case, an end 4B of the pipe 4 opens into the upper space where the oil 2 is stored so that the oil 2 could flow through the pipe 4 even in the case where the openings 4a are closed. The oil 2 flows through the pipe 4, and thereby the pipe 4 acts as a heat exchanger. Thus, heat exchange occurs between the oil 2 and the heat storage material 3. The heat storage material 3 gradually is liquefied, and thereby the closure of the openings 4a naturally is released.

JP 2004-3832 A describes an example of a chemical heat-storage apparatus using a chemical reaction of a heat storage material. Fig. 13 indicates the chemical heat-storage apparatus of JP 2004-3832 A in which a heat storage material 9 is heated by a heating medium flowing through a heat exchanger 11, and heat is stored while water vapor generated from the heat storage material 9 is discharged outside a container 10. Thus, heat can be stored efficiently in a short time. In the heat release process, water is supplied to the heat storage material 9 in a solid state, and the heat of the heat storage material 9 is extracted using the heat exchanger 11. Water droplets W each having a diameter of at least 0.2 mm are spread on the heat storage material 9 from above in order to increase the conversion speed of the heat storage material 9 into a hydrate.

However, according to such a configuration in which water is spread on the heat storage material from above, in the case where the heat storage material at the time of heat storage is, for example, in a liquid state or in a solid-liquid coexistence state, and the heat storage material has a higher specific gravity than water, a uniform water supply to the heat storage material is difficult because water stays in an upper part of the heat storage material due to the difference in specific gravity.

In view of the above-mentioned circumstances, it is an object of the present invention to provide a chemical heat-storage apparatus capable of supplying water uniformly to a heat storage material in the heat release process.

### DISCLOSURE OF THE INVENTION

That is, the present invention provides a chemical heat-storage apparatus provided with: a container accommodating a heat storage material that has a higher specific gravity than water and that is capable of exothermically reacting with water; a heat exchanger that is provided in the container and that is capable of giving heat to the heat storage material in a heat storage process as well as absorbing heat from the heat storage material in a heat release process; a water flow path that has an opening opening downwardly and that is provided below the heat exchanger inside the container so as to supply, to the inside of the container, water to react with the heat storage material; and a distribution plate that is provided below the heat exchanger and above the opening inside the container and that has a plurality of through holes for introducing water supplied to the container from a lower part to an upper part.

In the above-mentioned chemical heat-storage apparatus of the present invention, the water supplied through the water flow path to the inside of the container reacts with the heat storage material while moving upward in the container. Since the water flow path is provided below the heat exchanger, the heat storage material present around the heat exchanger can react with water efficiently in the heat release process. Further, since the distribution plate is provided between the opening in the water flow path and the heat exchanger, the water supplied through the opening to the inside of the container moves upward while being distributed by the distribution plate in the horizontal direction. Thus, it is possible to supply the water uniformly to the heat storage material, that is, a uniform mixture of the heat storage material and the water can be achieved, and efficient and rapid heat extraction is rendered possible. Furthermore, according to the present invention, the opening of the water flow path opens downwardly, and therefore the heat storage material is unlikely to enter the water flow path. That is, it is possible to prevent unintended reactions during heat storage from occurring due to the entering of the heat storage material into the water flow path.

According to another aspect of the present invention, there is provided a heat storage system provided with: a heat storage circuit having the above-mentioned heat storage apparatus of the present invention, a condenser for condensing water vapor, a reflux path for introducing water vapor generated from the heat storage material of the heat storage apparatus to the condenser in a heat storage process, a tank for storing the condensed water, and a supply path for introducing the water of the tank into the heat storage apparatus in a heat release process; a heating apparatus for giving heat to the heat storage material of the heat storage apparatus in the heat storage process; and a heating medium circuit for extracting heat from the heat storage material of the heat storage apparatus.

### BRIEF DESCRIPTION OF THE DRAWINGS

Fig. 1 is a schematic diagram illustrating a heat storage system according to one embodiment of the present invention.
Fig. 2 is a top view of a heat storage apparatus used in the heat storage system of Fig. 1.
Fig. 3 is a sectional view of the heat storage apparatus taken along the line III-III.
Fig. 4 is an enlarged partial view of Fig. 2.
Fig. 5 is a sectional view illustrating a distribution plate according to a modified embodiment.
Fig. 6 A is an enlarged partial view of Fig. 5.
Fig. 6 B is an enlarged partial view illustrating a distribution plate according to another modified embodiment.
Fig. 7 is an explanatory diagram of a model used for the calculation of the preliminary reaction rate.
Fig. 8 A is a graph indicating the calculation results (CaCl₂) of the preliminary reaction rate.
Fig. 8 B is a graph indicating the calculation results (MgSO₄) of the preliminary reaction rate.
Fig. 9 is an operational diagram illustrating the heat storage process in the heat storage system illustrated in Fig. 1.
Fig. 10 is an operational diagram illustrating the heat release process in the heat storage system illustrated in Fig. 1.
Fig. 11 is a phase diagram indicating the transformation of the heat storage material (calcium chloride hydrate).
Fig. 12 is a schematic diagram illustrating a conventional latent heat storage apparatus.

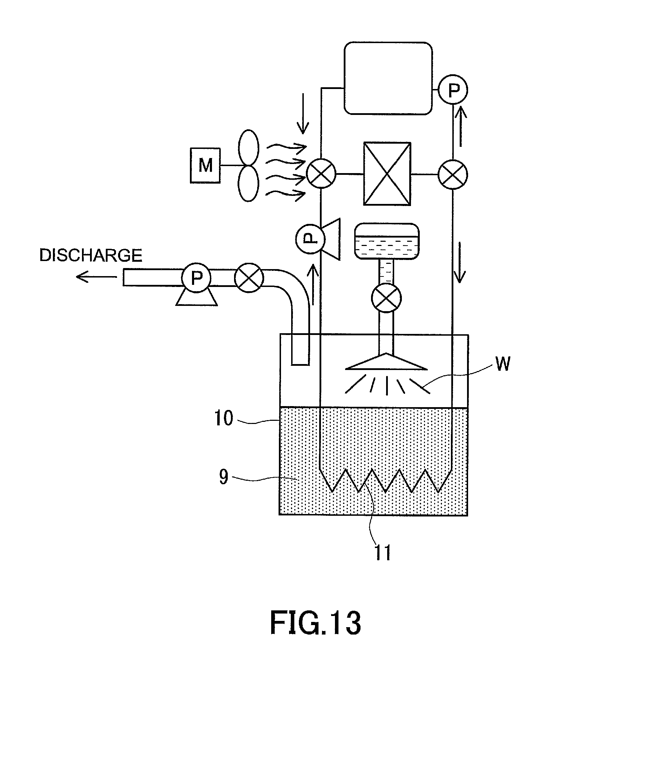

Fig. 13 is a schematic diagram illustrating a conventional chemical heat-storage apparatus.

### BEST MODE FOR CARRYING OUT THE INVENTION

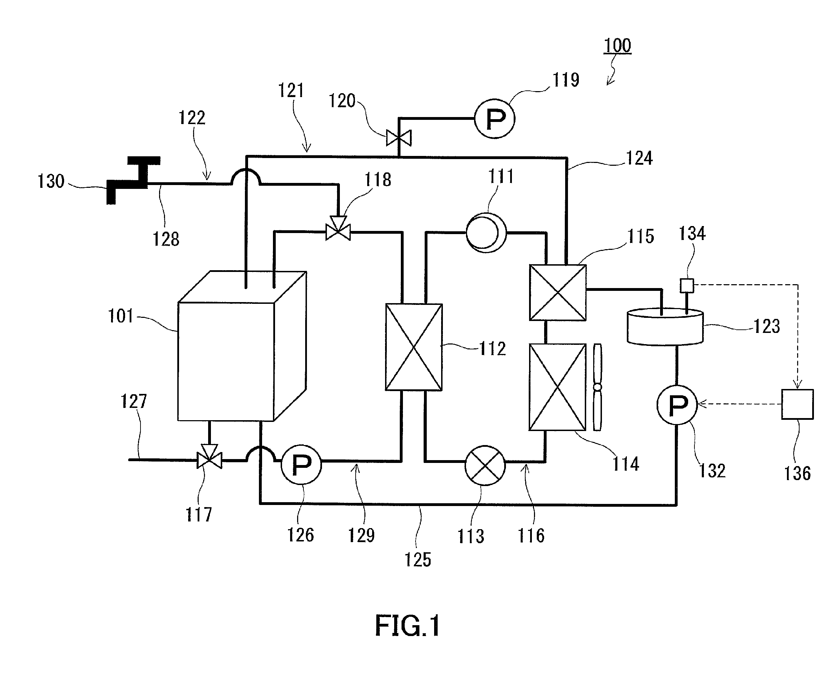

Fig. 1 is a schematic diagram illustrating a heat storage system according to one embodiment of the present invention. A heat storage system 100 is equipped with a heat pump 116, a heat storage circuit 121 and a heating medium circuit 122.

The heat pump 116 is equipped with a compressor 111, a heat radiator 112, an expander 113, a first evaporator 114 and a second evaporator 115. These equipments are connected by refrigerant pipes, thereby forming a refrigerant circuit. The second evaporator 115 is used as a condenser 115 for the heat storage circuit 121. The refrigerant circuit is filled with refrigerant such as carbon dioxide and hydrofluorocarbon. The refrigerant that has been compressed in the compressor 111 is cooled in the heat radiator 112. Thereafter, it is expanded in the expander 113, then evaporated in the first evaporator 114 and the second evaporator 115, and returned to the compressor 111 again.

As a heating apparatus other than the heat pump 116, resistance heating apparatuses, combustion heating apparatuses, heating apparatuses using natural energy such as sunlight and geothermal heat, and heating apparatuses using heat discharged from plants or buildings can be employed.

The heat storage circuit 121 has a heat storage apparatus 101, a condenser 115, a recovery tank 123, a vacuum pump 119, an on-off valve 120, a reflux path 124 and a supply path 125. The reflux path 124 is a circuit for collecting, into the recovery tank 123, the water vapor that has been extracted from the heat storage apparatus 101 in the heat storage process. The reflux path 124 connects the upper part of the heat storage apparatus 101, the condenser 115 and the upper part of the recovery tank 123 in this order. The water vapor that has been extracted from the heat storage apparatus 101 is condensed in the condenser 115, and the condensed water is stored in the recovery tank 123. The supply path 125 is a circuit for supplying water in the recovery tank 123 (dilution water) to the heat storage apparatus 101 in the heat release process. The supply path 125 connects the lower part of the recovery tank 123 to the water flow path of the heat storage apparatus 101. The supply path 125 is provided with a water supply pump 132.

The heating medium circuit 122 is a circuit for supplying heat of the heat pump 116 to the heat storage apparatus 101 in the heat storage process and extracting heat from the heat storage apparatus 101 in the heat release process. A heating medium to flow through the heating medium circuit 122 typically is water. Specifically, the heating medium circuit 122 is constituted by an introduction circuit 127, a hot water supply circuit 128 and a main circuit 129. The heat radiator 112, a second three-way valve 118, the heat storage apparatus 101, a first three-way valve 117 and a circulation pump 126 are connected in this order by pipes, thereby forming the main circuit 129.

In the heat storage process, the heating medium is circulated in the main circuit 129 and the heat of the heating medium that has been heated by the heat pump 116 is stored in the heat storage apparatus 101. The introduction circuit 127 is connected to the first three-way valve 117, and city water can be supplied to the main circuit 129 through the introduction circuit 127. The hot water supply circuit 128 is connected to the second three-way valve 118, and the hot water of the main circuit 129 can be supplied to a tap 130 through the hot water supply circuit 128. In the heat release process, the city water from the introduction circuit 127 is heated in the heat storage apparatus 101, which then is introduced into the hot water supply circuit 128.

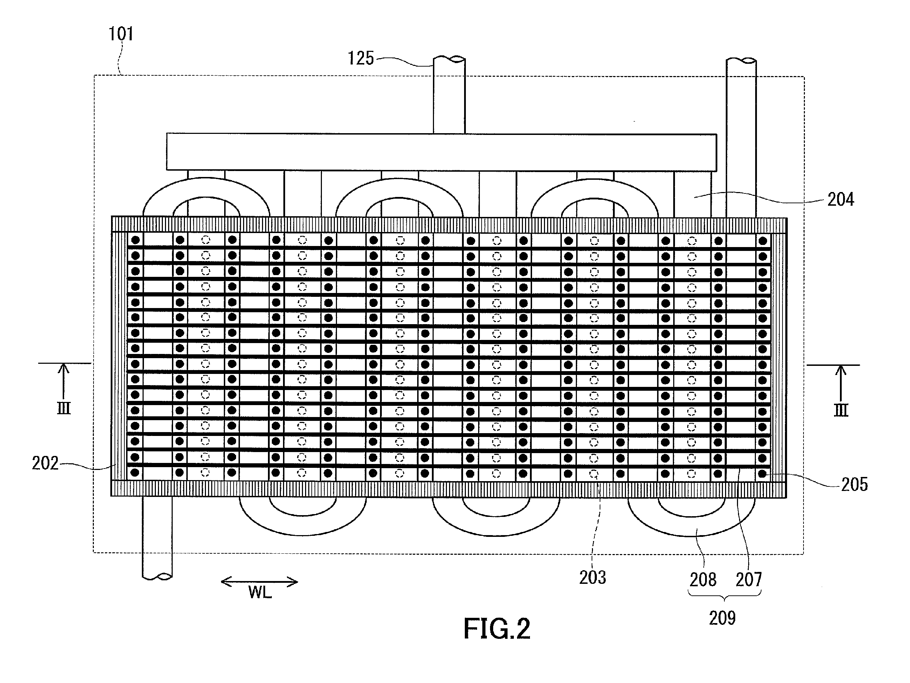

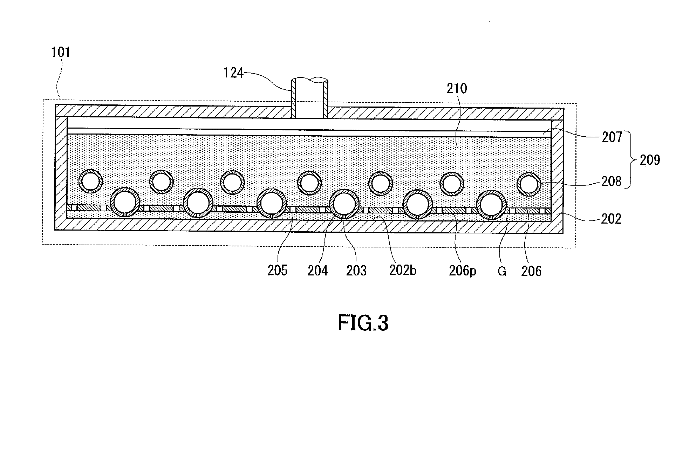

Next, the heat storage apparatus 101 is described in detail. Fig. 2 is a top view of the heat storage apparatus used in the heat storage system of Fig. 1. Fig. 3 is a sectional view of the heat storage apparatus taken along the line III-III. The heat storage apparatus 101 is classified as a chemical heat-storage apparatus, and specifically, a hybrid type of sensible heat storage, latent heat storage and chemical heat storage is employed therefor. As indicated in Fig. 2 and Fig. 3, the heat storage apparatus 101 is provided with a container 202 (heat storage container), water flow paths 204, a heat exchanger 209 and a distribution plate 206.

In view of preventing radiation loss, the container 202 preferably has excellent thermal insulation properties. The upper part of the container 202 is connected with the reflux path 124 for introducing water vapor into the condenser 115 (Fig. 1).

As indicated in Fig. 3, the container 202 accommodates a heat storage material 210 having a higher specific gravity than water. The heat storage material 210 exothermically reacts with water, and endothermically reacts by dehydration. The heat storage material 210 has a higher specific gravity than water at any time of heat storage and heat release, and during the period of performing the heat storage process and the period of performing the heat release process. As the heat storage material 210, at least one selected from calcium chloride hydrate, calcium bromide hydrate and magnesium sulfate hydrate can be used. Among these, calcium chloride hydrate is used suitably because of its high storage capacity, the ease of heat extraction, and the like. Calcium chloride hydrate is capable of reversibly adsorbing and desorbing water. It absorbs heat due to water elimination and generates heat due to bonding with water. Particularly, calcium chloride hexahydrate that transforms, due to water elimination, into calcium chloride tetrahydrate, further into calcium chloride dihydrate, can be used suitably.

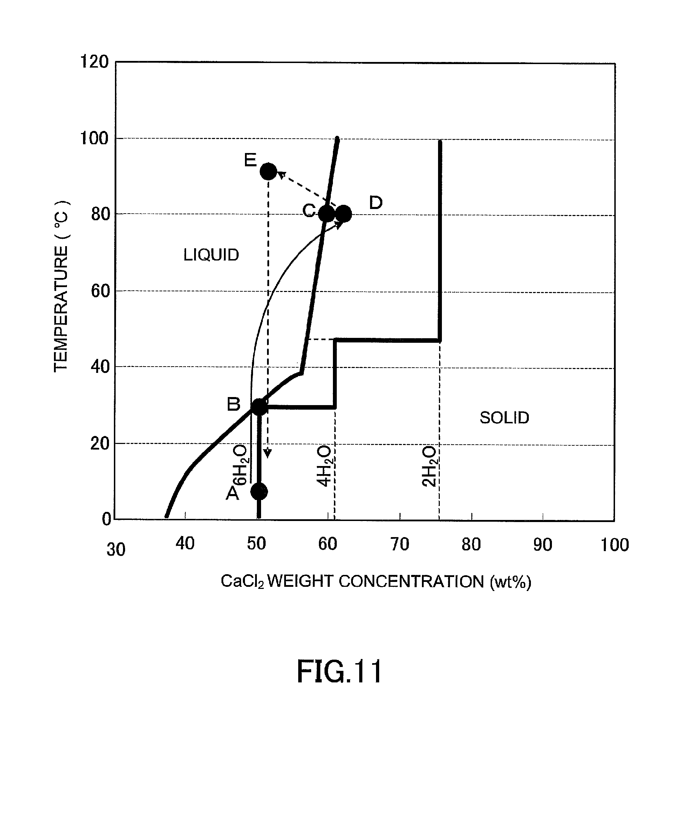

Fig. 11 is a phase diagram indicating the transformation of calcium chloride hydrate as one example of the heat storage material. The horizontal axis indicates the weight concentration of calcium chloride with respect to the total weight of the heat storage material, and the vertical axis indicates the temperature thereof. In Fig. 11, the phases of the heat storage material are indicated. For example, calcium chloride hydrate (hexahydrate) having a weight concentration of 50% is in a solid state at a temperature of less than 30°C. If the temperature exceeds 30°C, a calcium chloride solution is generated.

In this embodiment, the heat storage material 210 is in a solid-liquid coexistence state or in a liquid phase at the time of the start of the heat release process. Specifically, a controller 136 controls the amount of water vapor to be introduced from the container 202 into the condenser 115 in the heat storage process so that the heat storage material 210 is maintained in a solid-liquid coexistence state or in a liquid phase. For example, it controls the amount of water vapor to be drawn from the container 202 so that the weight concentration of calcium chloride falls within the range of 60% to 75% at 80°C. Specifically, the controller 136 controls the period of performing the heat storage process (the operation period of the heat pump 116) by monitoring the amount of water of the recovery tank 123 using a detector 134 such as a float sensor so that the amount of water of the recovery tank 123 falls within a predetermined range. Thus, heat is stored while the heat storage material 210 is in a solid-liquid coexistence state. In the case of the heat storage material 210 in a solid-liquid coexistence state, uniform water supply to the heat storage material 210 is possible in the heat release process. Accordingly, the heat storage apparatus 101 of this embodiment makes it feasible to extract heat efficiently and rapidly.

On the other hand, the heat storage material 210 at the time of the start of the heat storage process may be in a solid phase. For example, the controller 136 controls the amount of water supply to the container 202 in the heat release process so that the weight concentration of calcium chloride is about 50%. Specifically, it controls the operation of the water supply pump 132 so that the amount of water of the recovery tank 123 falls within a predetermined range. The temperature inside the container 202 after the sufficient extraction of heat is, for example, less than 30°C, and calcium chloride hexahydrate in a solid state precipitates therein. Of course, it is possible that the weight concentration of calcium chloride is set in the range of 50 to 60% and a mixture of the tetrahydrate and hexahydrate is formed.

Further, it also is possible to reduce the discharge amount (condensation amount) of water vapor so that the heat storage material 210 at the time of the completion of the heat storage process is in a liquid phase. Furthermore, a valve may be provided on the reflux path 124. A configuration in which the valve is opened during the period of performing the heat storage process and closed during periods other than the above period also is possible. Such a configuration can prevent the water vapor from escaping from the container 202 until the heat storage material 210 transforms into a solid phase as well as reducing radiation loss.

It should be noted that although a control line is omitted in Fig. 1, the controller 136 may be configured to control the heat pump 116, the first three-way valve 117, the second three-way valve 118, the vacuum pump 119, the on-off valve 120 and the circulation pump 126.

As indicated in Fig. 2 and Fig. 3, the heat exchanger 209 in this embodiment is a fin-tube heat exchanger having a plurality of fins 207 aligned parallel to each other, and a heat transfer tube 208 passing through the plurality of the fins 207. Use of the fin-tube heat exchanger enables rapid heat storage/heat release. In the heat storage process, the heating medium heated in the heat pump 116 flows through the heat transfer tube 208. In the heat release process, city water from the introduction circuit 127 flows through the heat transfer tube 208.

The water flow paths 204 are provided in a lower part of the container 202.
The water flow paths 204 are located below the heat exchanger 209 inside the container 202. Openings 203 opening downwardly are formed on the water flow paths 204, as apertures for water supply. Water in the water flow paths 204 is supplied to the inside of the container 202 through the openings 203. The openings 203 face a bottom surface 202b of the container 202, and a gap having an appropriate width is ensured between the openings 203 and the bottom surface 202b of the container 202. The gap enables a smooth water supply to the container 202 through the openings 203. Further, since the heat storage material 210 at the time of the completion of the heat storage process is in a solid-liquid coexistence state or in a liquid phase in this embodiment, water can be supplied uniformly to the heat storage material 210 through the water flow paths 204 provided in the lower part of the container 202.

The water flow paths 204 each may have an internal diameter in the range of 3 to 30 mm (more preferably 3 to 8 mm) in view of the reduction of dead space not contributing to heat storage as well as the prevention of the increase in pressure loss due to scale deposition. In this embodiment, a plurality of pipes horizontally aligned parallel to each other are laterally inserted straight into the container 202 for constituting the water flow paths 204. That is, the water flow paths 204 each extend in the horizontal direction inside the container 202. A plurality of the openings 203 are formed on each of the water flow paths 204 along the longitudinal direction at equal intervals. The water flow paths 204 are merged into one outside the container 202, which is connected to the supply path 125. The total area of the plurality of the openings 203 formed on each water flow path 204 may be in the range of 30 to 50% with respect to the cross-sectional area of the water flow path 204. This makes it possible to supply an equal amount of water to the inside of the container 202 through each opening 203.

The distribution plate 206 is provided below the heat exchanger 209 inside the container 202 as well as above the openings 203 of the water flow paths 204.
In other words, the thickness of the distribution plate 206 used in this embodiment is smaller than the outer diameter of the water flow path 204. Although the material of the distribution plate 206 is not specifically limited, the distribution plate 206 may be made of a metal or a resin having an excellent corrosion resistance. In the distribution plate 206, a plurality of through holes 205 are formed so that the water supplied through the water flow paths 204 to the inside of the container 202 is introduced from the bottom to the top. The through holes 205 are formed along the longitudinal direction of the water flow path 204 so that each through hole 205 is located between adjacent two of the fins 207.

In this embodiment, the upper parts of the water flow paths 204 are exposed above the distribution plate 206, and the lower parts of the water flow paths 204 are exposed below the distribution plate 206. In other words, the distribution plate 206 is arranged above the openings 203 of the water flow paths 204 and below the tops of the water flow paths 204. That is, the distribution plate 206 is provided, extending over one of the water flow paths 204 and another of the water flow paths 204 that are adjacent to each other. In this way, it is possible to ensure an effect on the distribution in the horizontal direction of the water supplied to the inside of the container 202, while suppressing the reduction of the filling amount of the heat storage material 210 due to the providing of the distribution plate 206.

As indicated in Fig. 3, a gap G having a height exceeding the projecting height of the water flow paths 204 from a lower surface 206p is formed between the lower surface 206p of the distribution plate 206 and the bottom surface 202b (inside bottom surface) of the container 202. This gap G also is filled with the heat storage material 210. The gap G may have a height that allows water to flow smoothly through the horizontal direction, such as a height of 1 to 3 mm, for example.

The mutual relationship of the heat exchanger 209, the water flow paths 204 and the distribution plate 206 is described further in detail.

As indicated in Fig. 2, the plurality of the fins 207 aligned in parallel are accommodated in the container 202 while standing upright. In the container 202, the longitudinal direction of the heat transfer tube 208 is consistent with the longitudinal direction of the water flow path 204. Further, the heat transfer tube 208 and the water flow paths 204 are aligned alternately in the direction (direction WL indicated in Fig. 2) parallel to both of the horizontal direction and the in-plane direction of the fin 207. That is, the heat transfer tube 208 and the water flow paths 204 have a staggered arrangement in the cross section (Fig. 3) perpendicular to the longitudinal direction of the water flow path 204. With such an arrangement, the water that has been supplied to the inside of the container 202 can move upward smoothly along the fins 207, so that the water spreads uniformly all over the inside of the container 202. As a result, efficient and rapid heat release is rendered possible.

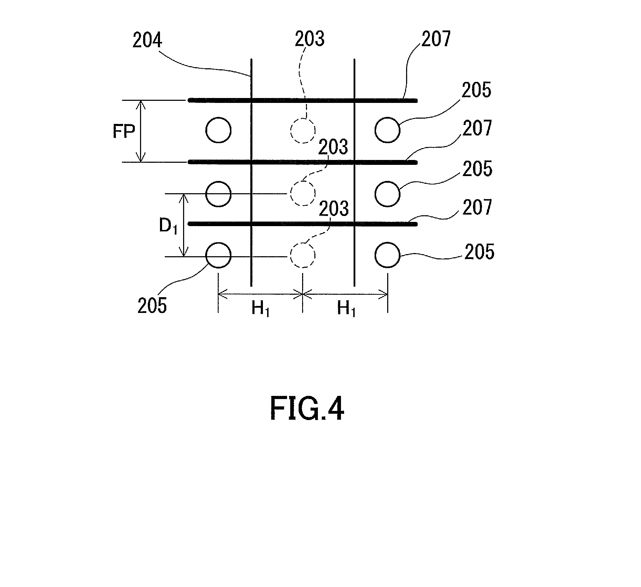

Further, the horizontal distance H₁ between one selected from the plurality of the through holes 205 and the opening 203 located closest to the selected through hole 205 is constant for every one of the plurality of through holes 205, as indicated in the enlarged plan view of Fig. 4. With such a positional relationship, the water that has been supplied through the water flow paths 204 to the inside of the container 202 flows into each of the plurality of the through holes 205 in an equal amount. Therefore, the water can be supplied, without unevenness, to the heat storage material 210 present above the distribution plate 206, so that concentration distribution is unlikely to occur in the heat storage material 210. As a result, efficient and rapid heat release is rendered possible.

Further, the number of the through holes 205 formed in the distribution plate 206 is at least twice the number of the openings 203 formed in the water flow paths 204. Thus, the effect on the distribution in the horizontal direction of the water supplied through the water flow paths 204 to the inside of the container 202 is enhanced.

As indicated in Fig. 4, the plurality of the fins 207 are arranged perpendicularly to the longitudinal direction of the water flow path 204. The plurality of the openings 203 are formed in the water flow path 204 at the interval D₁ equal to the fin pitch FP for the plurality of the fins 207. The fin pitch FP means the interval between the arrays of the fins 207 when the thickness of the fins 207 is assumed to be zero. Furthermore, the through holes 205 are formed in the distribution plate 206 at the interval D₁ equal to the fin pitch FP in a direction parallel to the longitudinal direction of the water flow path 204. Such a configuration allows water to be introduced in equal amounts to each fin 207, which therefore is effective for more efficient and rapid heat release. This configuration is particularly effective in the case where the inside of the container 202 is partitioned by the fins 207 in a direction orthogonal to the longitudinal direction of the water flow path 204.

Further, the interval between two of the through holes 205 adjacent to each other in the direction (direction WL indicated in Fig. 2) parallel to both of the horizontal direction and the in-plane direction of the fin 207 is larger than the interval D₁ of the openings 203. The formation of the through holes 205 in the above-mentioned direction at an appropriately large interval makes it possible to deal with the reduction of the number of the water flow paths 204. The reduction in the number of the water flow paths 204 leads to a decrease in dead space and therefore is preferable.

Further, the heat exchanger 209 (specifically, the fins 207) is in contact directly with the distribution plate 206 in this embodiment. The heat exchanger 209 (specifically, the fins 207) also is in contact directly with the water flow paths 204. In this way, it is possible to heat the water flow paths 204 and the distribution plate 206 efficiently at the time of heat storage. Then, it also is possible to heat the heat storage material 210 present in the periphery of the water flow paths 204 and the distribution plate 206 without fail, therefore preventing the openings 203 and the through holes 205 from being closed by the heat storage material 210 in a solid state.

For example, if the fins 207 are distant from the water flow paths 204 and the distribution plate 206, heat is not conducted sufficiently from the heat exchanger 209 to the heat storage material 210 present in the lower part of the container 202. Thus, there is a possibility that the heat storage process ends with the openings 203 and the through holes 205 being closed by the heat storage material 210 in a solid state. In contrast, according to this embodiment, the heat of the heat exchanger 209 (to be precise, the heat of the heating medium) is conducted directly to the water flow paths 204 and the distribution plate 206, so that the heat storage material 210 present in the lower part of the container 202 can be melted without fail, thereby avoiding the closure of the openings 203 and the through holes 205.

Further, the water flow paths 204 are in contact directly with the distribution plate 206. Specifically, the pipes (the water flow paths 204) are fitted tightly into the distribution plate 206 so as to inhibit water from moving upward along the surface of the pipes constituting the water flow paths 204. In this way, the entire amount of the water supplied to the inside of the container 202 through the openings 203 of the water flow paths 204 hits the lower surface 206p of the distribution plate 206, thereby being distributed in the horizontal direction so as to move upward through the through holes 205. As a result, it is possible to supply the water uniformly to the heat storage material 210 present above the distribution plate 206. Further, the heat of the water flow paths 204 is conducted directly to the distribution plate 206. Therefore, it is possible to prevent the through holes 205 from being closed by the heat storage material 210 more reliably.

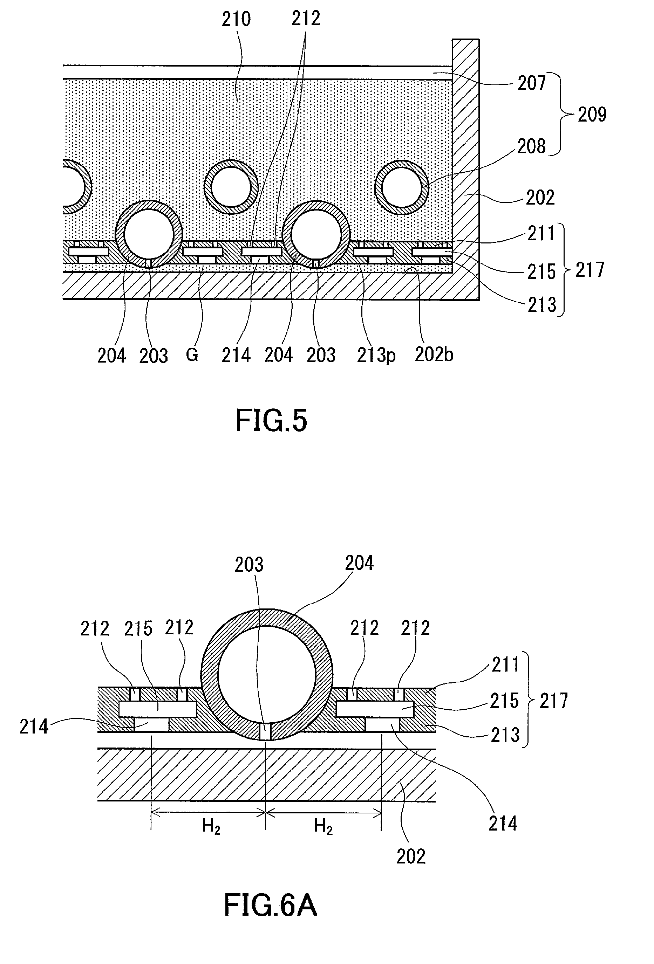

The distribution plate for distributing water flow is not limited to those having the structure indicated in Fig. 3. For example, as indicated in Fig. 5, a distribution plate 217 having a double layer structure can be used suitably.

As indicated in Fig. 5, the distribution plate 217 of this modified embodiment is constituted by an upper plate portion 211, a lower plate portion 213 and internal spaces 215 formed between the upper plate portion 211 and the lower plate portion 213. The lower plate portion 213 is located so that water is introduced through the water flow paths 204 into the gap G between the bottom surface 202b of the container 202 and the lower surface 213p of the lower plate portion 213 itself. In the lower plate portion 213, a plurality of lower through holes 214 are formed for introducing, into the internal spaces 215, the water supplied to the inside of the container 202 through the water flow paths 204. The upper plate portion 211 is located between the lower plate portion 213 and the tops of the water flow paths 204. The upper plate portion 211 is formed with a plurality of upper through holes 212 for introducing the water present in the internal spaces 215 upwardly. The water supplied to the inside of the container 202 through the water flow paths 204 flows through the lower through holes 214, the internal spaces 215 and the upper through holes 212 in this order, so that it moves from the space (gap G) below the distribution plate 217 to the space above the distribution plate 217. The distribution plate 217 has an excellent function of distributing water in the horizontal direction because a plurality of the upper through holes 212 are provided with respect to one of the lower through holes 214.

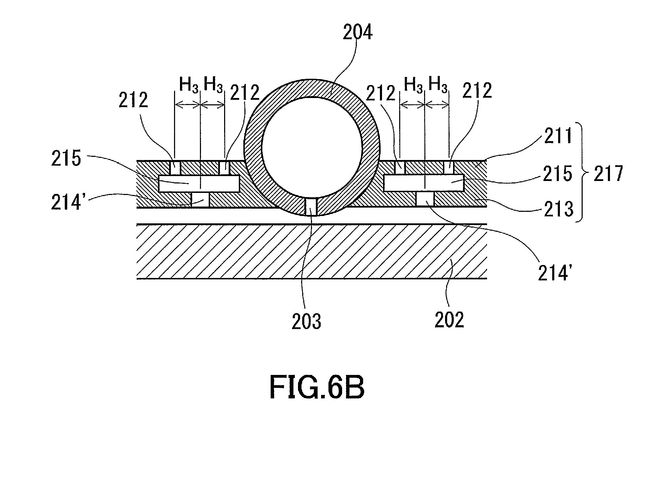

As indicated in Fig. 6 A, the horizontal distance H₂ from one of the openings 203 of the water flow paths 204 to the closest one of the lower through holes 214 is constant. The lower through holes 214 formed in the distribution plate 217 of this modified embodiment each have a wide mouth, and therefore the center position of each of the lower through holes 214 is adjusted (offset) so that the water flows equally into the two upper through holes 212. As indicated in Fig. 6 B, the horizontal distance H₃ between the one of the lower through holes 214' and the closest one of the upper through holes 212 may be constant with respect to all the upper through holes 212.

As indicated in Fig. 3 etc., since the openings 203 of the water flow paths 204 open downwardly, it is possible to prevent the heat storage material 210 from entering the water flow paths 204 through the openings 203 in this embodiment. However, since the heat storage material 210 is in a solid-liquid coexistence state or in a liquid phase at the time of the completion of the heat storage process, the heat storage material 210 can be diffused to some extent inside the water flow paths 204 through the openings 203, thus causing unintended reactions. Hereinafter, such a phenomenon is referred to as "preliminary reactions".

There is a limitation on the size of the openings 203 of the water flow paths 204 in this embodiment, in order to minimize preliminary reactions. Specifically, the total area S₁ of the openings 203 is defined so that the water weight W₁ in each water flow path 204 and the total area S₁ of the openings 203 formed in the water flow path 204 satisfy the relationship expressed by the following formula (1).
500 ≤ (W₁/S₁) (unit: kg/m²) ... (1)

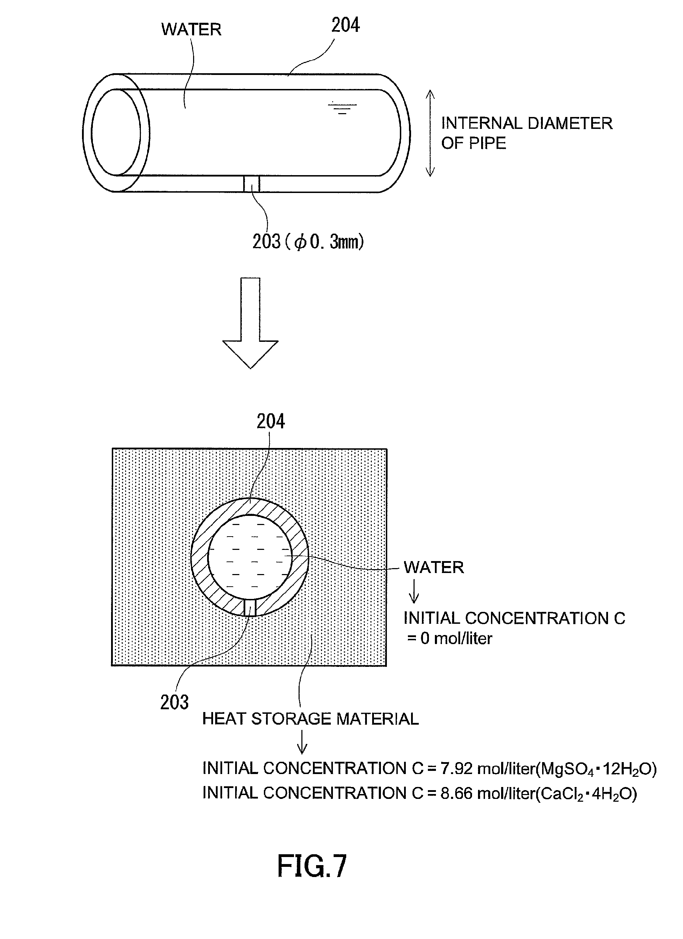

The above-described formula (1) has been found as a result of the following study. Specifically, the preliminary reaction rate after 8 hours was calculated for the model indicated in Fig. 7 based on the following diffusion equation in order to predict the degree of the diffusion of the heat storage material. Here, the "preliminary reaction rate" means a value indicating the ratio of the heat storage material diffused into water present inside the pipe (water flow path 204). For example, the state of the "preliminary reaction rate = 100%" means that the heat storage material concentration in the solution inside the pipe and the heat storage material concentration in the solution outside the pipe are equalized. Assuming that the heat storage process was performed during the night and the heat release process was performed during the daytime, the preliminary reaction rate after 8 hours was calculated.

Calculation formula: ∂C/∂t = D(∂²C/∂x² + ∂²C/∂y² + ∂²C/∂z²)
C: molar concentration (mol/liter)
t: time (sec)
x, y, z: coordinates
Diffusion coefficient (CaCl₂) D = 1.11*10⁻⁹m²/sec
Diffusion coefficient (MgSO₄) D = 0.849*10⁻⁹m²/sec

In the model indicated in Fig. 7, one opening 203 is provided in each pipe 204. The preliminary reaction rate was calculated for each of 4 types of pipes respectively having an internal diameter of 3 mm, 8 mm, 16 mm and 30 mm while varying the amount of the water present therein by varying the length of the pipe. The diameter of the opening 203 was fixed to 0.3 mm. A calcium chloride aqueous solution and a magnesium sulfate aqueous solution each having an initial concentration indicated in Fig. 7 were used as a heat storage material in the calculation model.

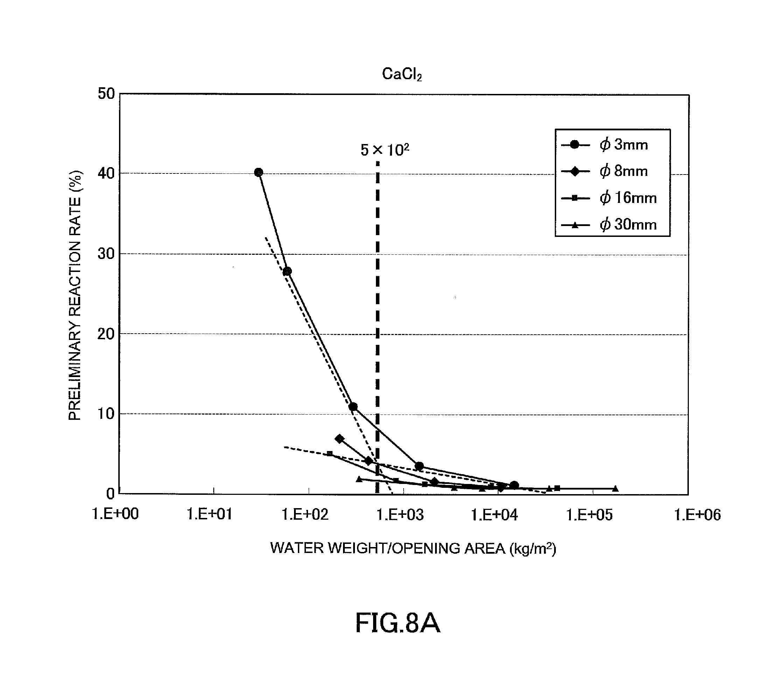

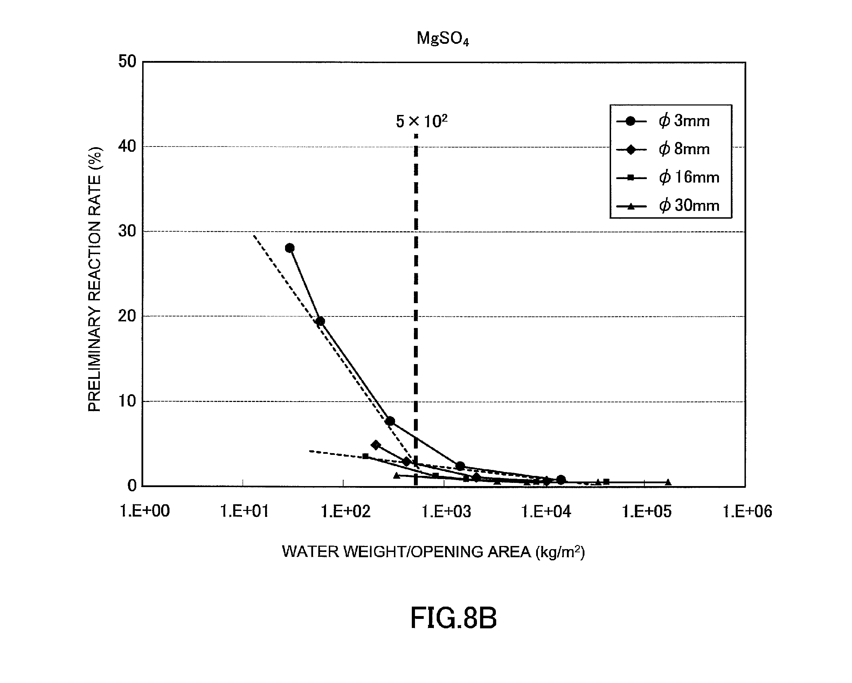

Fig. 8 A and Fig. 8 B indicate the calculation results. Fig. 8 A indicates the calculation results for sodium chloride, and Fig. 8 B indicates the calculation results for magnesium sulfate. The vertical axis in the graph indicates the preliminary reaction rate (%). The horizontal axis indicates the value of (W₁/S₁) (unit: kg/m²), when the water weight in the pipe is referred to as W₁ and the area of the opening (opening area) is referred to as S₁. As indicated in Fig. 8 A and Fig. 8 B, the thicker the pipe is, the lower the preliminary reaction rate should be. The preliminary reaction rate after about 8 hours was less than 10% in the pipe having an internal diameter of 8 mm or more.

However, since there are problems such as an increase in dead space and a reduction in the amount of heat to be stored, there also is a limitation on the thickness of pipes to be used. Further, the pipe should not be too thin because of the problem of scale deposition. Specifically, a pipe having an internal diameter of 3 to 8 mm is used suitably for the water flow path 204. Therefore, it is fairly reasonable to find a suitable range of (W₁/S₁) from the calculation results for the pipe having an internal diameter of 3 mm. Further, according to the calculation results for the pipe of ϕ3 mm, there is a sudden inclination variation in the curve of the preliminary reaction rate at the border of (W₁/S₁) = 500. Accordingly, the design of the water flow path 204 satisfying 500 ≤ (W₁/S₁) makes it possible to achieve the preliminary reaction rate of less than 10%.

There is no particular limitation on the upper limit of the value of (W₁/S₁), but a measure of the upper limit of the value can be determined in view of the following. For example, in the case of using a 0.1 mm thick fin for the heat exchanger, it is conceivable that the fin pitch is set to at least 1 mm as well as the interval of the openings 203 is set to at least 1 mm, in order to achieve the filling rate of the heat storage material inside the container to at least 90%. On the other hand, each pipe (water flow path 204) preferably has an internal diameter of 1 inch (25.4 mm) or less in view of processability. Considering the openings 203 of ϕ0.3 mm in the context of these conditions, the water flow path 204 may be designed so that (W₁/S₁) ≤ 7000 is satisfied approximately.

### «Heat storage operation»

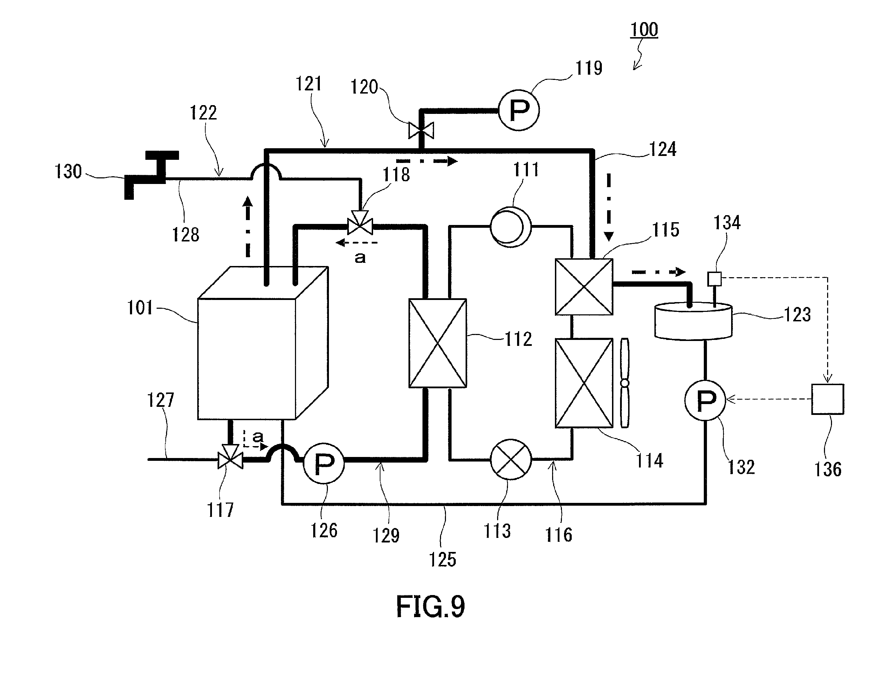

Next, heat storage operation is described with reference to Fig. 9.

First, the on-off valve 120 is opened, so that the vacuum pump 119 is started, and the pressure inside the container 202 of the heat storage apparatus 101, the reflux path 124 and the condenser 115 is reduced. After the pressure is reduced to a predetermined level, the on-off valve 120 is closed, so that the vacuum pump 119 is stopped.

Next, the first three-way valve 117 and the second three-way valve 118 are set so that water is circulated in the main circuit 129 of the hot water supply circuit 122 in the direction of the arrow *a*. Thereafter, the operation of the heat pump 116 is started. The water circulating in the main circuit 129 is heated by the heat radiator 112 of the heat pump 116. The water heated to a temperature of about 80°C flows into the heat exchanger 209 of the heat storage apparatus 101 (to be precise, the heat transfer tube 208) to heat the heat storage material 210. Since the fins 207 of the heat exchanger 209 are in contact directly with the water flow paths 204 and the distribution plate 206, the water flow paths 204 and the distribution plate 206 also are heated efficiently and the heat is delivered sufficiently to the heat storage material 210 present in the lower part of the container 202.

As indicated in Fig. 11, the heat storage material 210 is in a solid state at the time of the start of the heat storage process (point A). The heating proceeds, and when the temperature is increased to 30°C or more (point B), the heat storage material 210 transforms into a liquid. Since the pressure of each of the container 202, the reflux path 124 and the condenser 115 is reduced, dehydration starts after the heat storage material 210 is transformed into a liquid. The condenser 115 is cooled by refrigerant at low temperature (e.g. 0°C) circulating in the heat pump 116. Accordingly, the water vapor generated from the heat storage material 210 is condensed due to heat exchange with the refrigerant in the condenser 115. The condensation heat is recovered by the heat pump 116.

The heating proceeds further, and the heat storage material 210 is concentrated with the temperature increase. When the concentration exceeds the solubility curve (point C), the heat storage material 210 in a solid state precipitates again so as to be transformed into a solid-liquid solution. At the time when the heat storage material 210 has a temperature of 80°C and a weight concentration of 61% (point D), the heat storage process is completed.

### «Heat release operation»

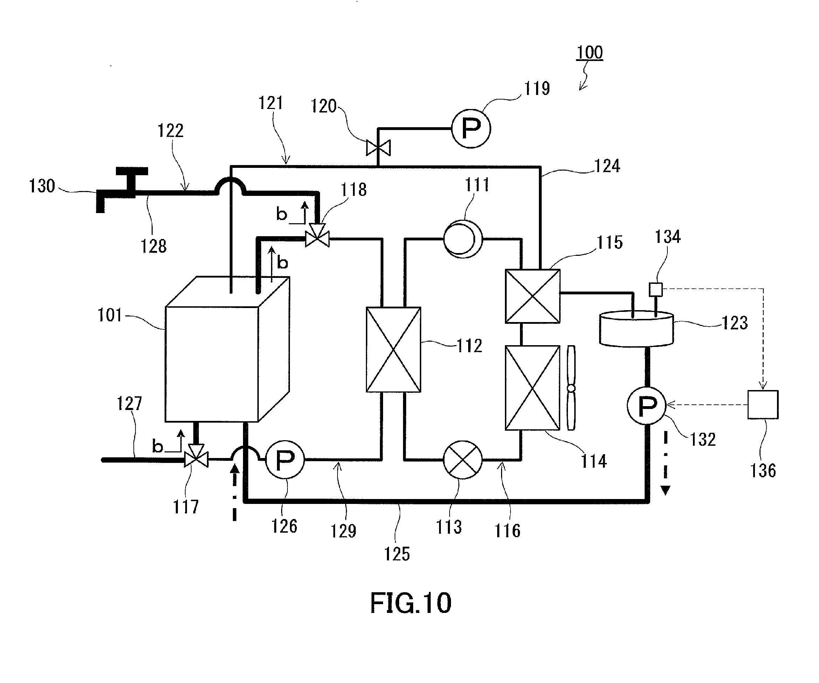

Next, heat release operation is described with reference to Fig. 10.

First, the first three-way valve 117 and the second three-way valve 118 are set so that water flows through the hot water supply circuit 122 in the direction of the arrow *b*, and city water is supplied through the introduction circuit 127 to the heat storage apparatus 101.

Next, water is supplied from the recovery tank 123 through the supply path 125 to the heat storage apparatus 101. The water for dilution supplied through the supply path 125 flows through the water flow paths 204 to be jetted downwardly through the openings 203 into the inside of the container 202. The water supplied to the inside of the container 202 immediately forms an upward flow based on the difference in specific gravity. For example, the specific gravity of the heat storage material 210 having a weight concentration of calcium chloride of 60 to 75% is about 1.5 kg/L at 80°C, and the specific gravity of the water supplied to the inside of the container 202 is about 1 kg/L.

In this embodiment, since the distribution plate 206 is provided above the openings 203, the water hits the distribution plate 206 to be distributed in the horizontal direction. Thereafter, the water in an equal amount is supplied through each through hole 205 to the heat storage material 210 in the upper part of the container 202. Then, the heat storage material 210 is diluted to a weight concentration of about 50%. The temperature of the heat storage material 210 rises up to 95°C due to the exothermic reaction (point E in Fig. 11). The heat storage material 210 is in a liquid phase at this time.

The action of the heat exchanger 209 causes the heat exchange between the city water flowing through the heat transfer tube 208 and the heat storage material 210. The city water absorbs heat from the heat storage material 210 and is introduced into the tap 130 through the hot water supply circuit 122. The temperature of the heat storage material 210 decreases, and when the temperature decreases to 30°C (point B) or less, the heat storage material 210 transforms into a solid. The heat release process is continued until the temperature of the city water at the outlet of the heat storage apparatus 101 decreases to a predetermined temperature (e.g. 42°C or less).

### INDUSTRIAL APPLICABILITY

The heat storage apparatus of the present invention can be used suitably for domestic water heaters and heating apparatuses. However, the present invention is not limited thereto, and it can be used widely for various systems for storing waste heat.

## Claims

1. A chemical heat-storage apparatus comprising:
a container accommodating a heat storage material with a higher specific gravity than water, the heat storage material being capable of exothermically reacting with water;
a heat exchanger provided in the container, the heat exchanger capable of giving heat to the heat storage material in a heat storage process as well as absorbing heat from the heat storage material in a heat release process;
a water flow path having an opening opening downwardly, the water flow path being provided below the heat exchanger inside the container so as to supply, to the inside of the container, water to react with the heat storage material; and
a distribution plate provided below the heat exchanger and above the opening inside the container, the distribution plate having a plurality of through holes for introducing water supplied to the container from a lower part to an upper part.

2. The chemical heat-storage apparatus according to claim 1, wherein
the heat storage material is in a solid-liquid coexistence state or in a liquid phase at the time of the start of the heat release process, and
the heat storage material is in a solid phase at the time of the start of the heat storage process.

3. The chemical heat-storage apparatus according to claim 1, wherein
the water flow path extends in a horizontal direction inside the container,
and
the distribution plate is arranged above the opening and below a top of the water flow path.

4. The chemical heat-storage apparatus according to claim 1, wherein
the water weight W₁ inside the water flow path and the total area S₁ of the opening satisfy the following formula (1): 500 ≤ (W₁/S₁) (unit: kg/m²) ... (1).

5. The chemical heat-storage apparatus according to claim 4, wherein
the water flow path has an internal diameter of 3 to 30 mm.

6. The chemical heat-storage apparatus according to claim 1, wherein
the water flow path has a plurality of the openings, and
a horizontal distance between one through hole selected from the plurality of the through holes and the opening located closest to the selected through hole is constant for every one of the plurality of through holes

7. The chemical heat-storage apparatus according to claim 6, wherein
the number of the through holes formed in the distribution plate is at least twice the number of the openings.

8. The chemical heat-storage apparatus according to claim 6, wherein
the heat exchanger is a fin-tube heat exchanger having a plurality of fins and a heat transfer tube passing through the plurality of the fins,
the plurality of the fins each are arranged perpendicular to a longitudinal direction of the water flow path, and
the distribution plate is formed with the plurality of the through holes at equal intervals to a fin pitch of the plurality of the fins in a direction parallel to the longitudinal direction of the water flow path.

9. The chemical heat-storage apparatus according to claim 1, wherein
the heat exchanger is in contact directly with the distribution plate.

10. The chemical heat-storage apparatus according to claim 1, wherein
the distribution plate has a lower plate portion located so that water is introduced through the water flow path into a gap between a bottom surface of the container and the lower surface of the lower plate portion, an upper plate portion located between the lower plate portion and a top of the water flow path, and an internal space formed between the lower plate portion and the upper plate portion, and
the plurality of the through holes include a plurality of lower through holes formed in the lower plate portion for the purpose of introducing, into the internal space, the water supplied through the water flow path to the inside of the container, and a plurality of upper through holes formed in the upper plate portion for the purpose of introducing the water present in the internal space upwardly.

11. The chemical heat-storage apparatus according to claim 1, wherein
the heat storage material is at least one selected from calcium chloride hydrate, calcium bromide hydrate and magnesium sulfate hydrate.

12. A heat storage system comprising:
a heat storage circuit having the heat storage apparatus according to claim 1, a condenser for condensing water vapor, a reflux path for introducing water vapor generated from the heat storage material of the heat storage apparatus into the condenser in a heat storage process, a tank for storing the condensed water, a supply path for introducing the water of the tank into the heat storage apparatus in a heat release process;
a heating apparatus for giving heat to the heat storage material of the heat storage apparatus in the heat storage process; and
a heating medium circuit for extracting heat from the heat storage material of the heat storage apparatus.
